# EUROPÄISCHE PATENTSCHRIFT

(11) **EP 0 391 183 B1**
(45) Veröffentlichungstag und Bekanntmachung des Hinweises auf die Patenterteilung: **29.06.1994**
(21) Anmeldenummer: 90105635.8
(22) Anmeldetag: 24.03.1990
(51) Int. Cl.: C08L 63/00, H01B 3/40

(54) **Elektrischer Isolator**
Electrical insulator
Isolant électrique

(30) Priorität: 07.04.1989 CH 1310/89; 20.02.1990 CH 536/90
(43) Veröffentlichungstag der Anmeldung: 10.10.1990
(73) Patentinhaber: ASEA BROWN BOVERI AG, 5400 Baden (CH)
(72) Erfinder: Demarmels, Anton, Dr., CH-8127 Forch (CH); Ritzer, Leopold, CH-5432 Neuenhof (CH)

(56) Entgegenhaltungen:
- EP-A- 0 285 450
- EP-A- 0 359 558
- WO-A-87/00188
- PATENT ABSTRACTS OF JAPAN, Band 13, Nr. 29 (C-562)[3377], 23. Januar 1989,Seite 2 C 562; & JP-A-63 230 780

## Beschreibung

### TECHNISCHES GEBIET

Bei der Erfindung wird ausgegangen von einem elektrischen Isolator nach dem Oberbegriff von Patentanspruch 1. Ein derartiger Isolator wird in der Mittel- und Hochspannungstechnik als mechanisch und thermisch hoch belastetes Teil verwendet, wie etwa als druckbeanspruchtes Löschkammergehäuse von Druckgasschaltern oder als Schottungsisolator in gasisolierten, metallgekapselten Schaltanlagen. Da als Werkstoff für diesen Isolator füllstoffverstärkte Duroplaste mit Glasumwandlungstemperaturen bis ca. 120 °C verwendet werden, kann solch ein Isolator bei hoher mechanischer Beanspruchung im Dauerbetrieb Temperaturen von höchstens 85 °C ausgesetzt werden. Es sind zwar auch Duroplaste mit höheren Glasumwandlungstemperaturen bekannt, jedoch sind diese Materialien sehr spröde und sind daher für eine Verwendung in einem mechanisch beanspruchten elektrischen Isolator nicht geeignet.

### STAND DER TECHNIK

Aus der älteren, nicht vorveröffentlichten europäischen Patentanmeldung EP-A-0 359 558 und aus EP-A-0 285 450 ist jeweils ein Isolator bekannt, welcher von einer Polymermatrix auf der Basis von Epoxidharz gebildet ist, in die als mineralischer Füllstoff Quarzpulver und als elastischer Füllstoff mit Methylmetacrylat überzogene Gummikugeln mit Partikeldurchmessern bis zu 350 »m eingebettet sind. Ein derartiger Isolator wird bevorzugt als Halbleitergehäuse verwendet.

In der Hoch- und Mittelspannungstechnik eingesetzte elektrische Isolatoren aus quarzmehl- oder korundgefüllten Polymeren auf der Basis von Epoxidharz sind beispielsweise in DE 3146003 A1 und DE 3532963 A1 beschrieben. Diese Isolatoren stehen in direktem Kontakt mit stromführenden Teilen einer elektrischen Anlage und erwärmen sich daher bei Betrieb der Anlage infolge der in den stromführenden Teilen gebildeten Stromwärme. Da die maximal zulässige Dauereinsatztemperatur dieser üblicherweise von mineralpulververstärkten Epoxidharzsystemen gebildeten Isolatoren bei gleichzeitig mechanischer Beanspruchung bei ca. 85 °C liegt, sind den von der Anlage übertragbaren Nennstromstärken unerwünscht niedrige Grenzen gesetzt.

Aus US 4026970 A ist es bekannt, die Zähigkeit von füllstoffverstärkten Duroplasten durch elastische Partikel mit einem überwiegend elastomeren Kern und einer den Kern umgebenden starren Hülle zu erhöhen. Über das Langzeitverhalten solcher Materialien bei erhöhten Temperaturen ist jedoch nichts ausgesagt.

Weiterer Stand der Technik ist in den nachfolgend aufgezählten Druckschriften enthalten:
- R.J. Young, D.L. Maxwell, A.J. Kinloch, "The deformation of hybrid-particulate composites", Journal of Materials Science 21 (1986) 380-388
- Prospekt über "Paraloid", Rohm and Haas Company, Independence Mall West Philadelphia, P.A. 19105, USA
- Patentberichte, "Thermoplastische Polyester-Formmassen mit hoher Zähigkeit", EP 0 131 202 B1, Patentinhaber: Bayer AG, Leverkusen, Kunststoffe 78 (1988) 10.

### DARSTELLUNG DER ERFINDUNG

Der Erfindung, wie sie im Patentanspruch 1 angegeben ist, liegt die Aufgabe zugrunde, einen elektrischen Isolator zu schaffen, welcher sich trotz starker mechanischer Beanspruchung auch bei Temperaturen bis zu 105 °C durch hohe Lebensdauer auszeichnet.

Durch Begrenzung der Durchmesser der zweiten Partikel auf Werte kleiner 5 »m wird beim Isolator nach der Erfindung gegenüber Isolatoren nach dem Stand der Technik, bei denen die zweiten Partikel Durchmesser bis zu 350 »m aufweisen, eine drastische Verbesserung der Lebensdauer bei gleicher mechanischer Belastung erreicht. Bei starker mechanischer Beanspruchung weist der Isolator nach der Erfindung selbst bei Temperaturen von 105 °C noch eine lange Lebensdauer auf. Er kann daher mit Vorteil als Schottungs- oder Stützisolator in gasisolierten metallgekapselten Schaltanlagen oder als Löschkammerisolator in Druckgasschaltern verwendet werden. Mit dem Isolator nach der Erfindung versehene Anlagen und Komponenten können vergleichsweise kompakt ausgebildet werden, da solche Anlagen und Komponenten bei höheren Temperaturen betrieben werden und damit höhere Nennströme führen können als vergleichbare Anlagen oder Komponenten mit Isolatoren nach dem Stand der Technik.

### WEG ZUR AUSFÜHRUNG DER ERFINDUNG

Die Erfindung wird nachfolgend anhand von Zeichnungen näher erläutert. Hierbei zeigt:
- Fig. 1: eine Aufsicht auf einen Schnitt durch einen typischen Teil des Isoliermaterials eines elektrischen Isolators nach der Erfindung, und
- Fig. 2: ein Zeitstand-Schaubild von Probekörpern für Zeitstand-Zugversuche, welche aus Material von Isolatoren nach der Erfindung und aus Material von Vergleichsisolatoren geformt worden sind.

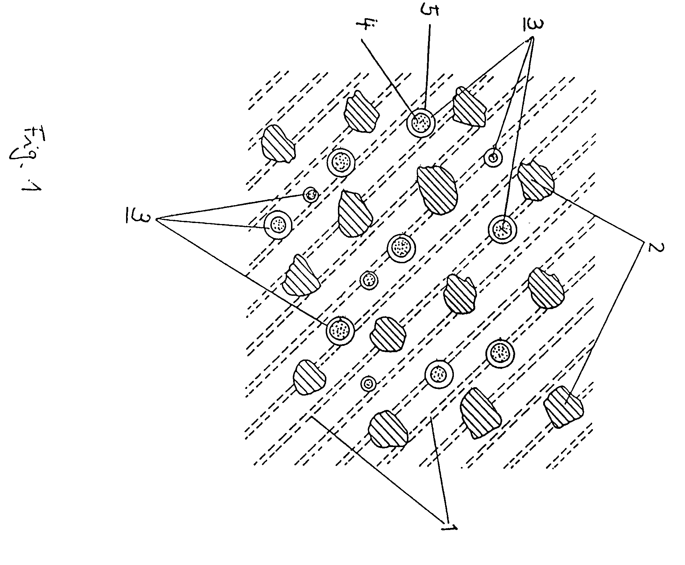

In Fig. 1 bezeichnet 1 eine Duroplastmatrix des elektrischen Isolators, in welche Partikel 2 aus überwiegend mineralischem Material sowie Partikel 3 mit einer gegenüber der Duroplastmatrix 1 erheblich, beispielsweise mindestens 5-10-fach, verringerten Steifigkeit eingebettet sind.

Die Duroplastmatrix enthält ein ausgehärtetes Reaktionsharz, etwa auf der Basis Epoxid oder Polyester und weist eine Glasumwandlungstemperatur T_{G} grösser 140 °C auf. Ein geeignetes Ausgangsmaterial für die Duroplastmatrix ist beispielsweise ein unter den Handelsbezeichnungen Araldit CY 225 und HY 1102 von der Firma Ciba-Geigy vertriebenes Harz-Härter-System mit einem Epoxidharz auf der Basis Bisphenol A und einem Härter auf der Basis einer Dicarbonsäure. Zu diesem wurde zusätzlich ein von der Firma Ciba-Geigy unter der Handelsbezeichnung DY 062 vertriebener Beschleuniger auf der Basis eines tertiären Amins verwendet.

Die Partikel 2 sind im wesentlichen pulverförmige mineralische Füllstoffe, etwa auf der Basis eines oder mehrerer von in der Giessharztechnik geläufigen Materialien, wie Mehlen von Quarz, Korund, Titandioxid oder Dolomit. Der Füllstoffanteil wird im allgemeinen 50 - 70, gegebenenfalls aber bis zu 80 Gewichtsprozent am Gesamtgewicht des Isolators betragen. Die obere Grenze des Füllstoffanteils ist durch die Verarbeitbarkeit (Giessbarkeit) des Füllstoff enthaltenden Harz-Härter-Systems bestimmt. Als Füllstoff besonders bewährt hat sich ein unter der Handelsbezeichnung W 10 von der Fa. Sihelco vertriebenes Quarzmehl mit Grössen der Partikel 2 von bis zu 130 »m.

Die Partikel 3 enthalten vorzugsweise jeweils einen elastisch verformbaren Kern 4 aus elastomerem Material und eine den Kern 4 umgebende harte Hülle 5. Derartig ausgebildete Partikel 3 werden von der Fa. Rohm und Haas unter der Handelsbezeichnung Paraloid EXL 2607 vertrieben (Paraloid ist eine eingetragene Marke der Firma Rohm und Haas Co, Philadelphia, USA). Hierbei handelt es sich bei den Teilchen um mit Methylmethacrylat beschichtete Gummikugeln mit einem Partikeldurchmesser von ca. 0,1 bis 1 »m.

### Ausführungsbeispiel 1

Für die Herstellung einer ersten Ausführungsform des Isolators nach der Erfindung wurden die nachfolgend aufgezählten Ausgangsstoffe verwendet:

| | Gewichtsteile |
|---|---|
| Epoxidharz Araldit CY 225 | 100 |
| Härter HY 1102 | 90 |
| Beschleuniger DY 062 | 0,2 |
| Füllstoff Paraloid EXL 2607 | 10 |
| Füllstoff Quarzmehl W10 | 300 |

Zunächst wurde das Epoxidharz mit dem Härter und dem Beschleuniger bei Raumtemperatur während 5 min gemischt. Dann wurde der zuvor bei 80 °C während 16 h vorgetrocknete Füllstoff Paraloid EXL 2607 bei der besagten Temperatur portionsweise zugegeben und während 5 min vermischt. Sodann wurde der mineralische Füllstoff Quarzmehl 2 nach vorheriger Trocknung bei 160 °C/16 h bei etwa derselben Temperatur in Raten sukzessive zugegeben und während weiteren 10 min gemischt. Es wurde dafür gesorgt, dass die fertige Mischung auf einer Temperatur von 80 °C gehalten wurde. Dann wurde die Mischung während 10 min einem Vakuum mit einem Restdruck innerhalb der Grenzen von 2 bis 5 mbar ausgesetzt. Es wurde auf Homogenität und Blasenfreiheit des Werkstoffs geachtet. Nun wurde eine Giessform auf eine Temperatur von 80 °C gebracht und der Werkstoff bei dieser Temperatur vergossen. Die gefüllte Giessform wurde daraufhin während 10 min einem Vakuum mit einem Restdruck von 5 bis 10 mbar ausgesetzt. Die Gelierung und der Härtungsprozess wurden bei Normaldruck während 4 h bei 80 °C und während 16 h bei 140 °C durchgeführt.

Nach dem Aushärten und Abkühlen wurden aus dem Material des Isolators Zugproben und einseitig gekerbte Biegekörper ausgeformt.

In entsprechender Weise wurden Probekörper ohne Zusatz von Partikeln 3 und Probekörper aus Material von Isolatoren nach dem Stand der Technik hergestellt. In der nachfolgenden Tabelle 1 sind die Glasumwandlungstemperaturen T_{G} und bei verschiedenen Prüftemperaturen T, die Bruchzähigkeit K_{IC} und die Zugfestigkeit δ_{F} aller Probekörper dargestellt.

**Tabelle 1**

| | Prüftemperatur T | Material von einem Isolator gemäss Stand der Technik | Material von einem Isolator ohne Zusatz von Partikeln 3 | Material von einem Isolator mit Zusatz von Partikeln 3 |
|---|---|---|---|---|
| T [°C] | | 119 | 151 | 146 |
| K_{IC} [MPam-1/2] | 23°C | 2.1 | -- | 1.8 |
| | 85°C | 2.0 | 1.3 | 1.9 |
| | 105°C | 2.0 | 1.3 | 1.8 |
| δ_{F} [MPa] | 23°C | 86 | 74 | 67 |
| | 85°C | 66 | 60 | 57 |
| | 105°C | 40 | 57 | 50 |

Ersichtlich weist der Isolator nach der Erfindung gegenüber einem entsprechenden jedoch ohne den Zusatz von Partikeln 3 gefertigten Isolator eine um ca. 40 - 50 % höhere Bruchzähigkeit K_{IC} auf und kann daher als mechanisch hochbeanspruchtes Bauteil, wie etwa als Löschkammerisolator eines SF₆-Leistungsschalters oder als Schottungsisolator in einer gasisolierten metallgekapselten Schaltanlage, verwendet werden.

Der Isolator nach der Erfindung weist annähernd gleiche Zugfestigkeit und Bruchzähigkeit auf wie üblicherweise verwendete Isolatoren nach dem Stand der Technik. Solche Isolatoren besitzen jedoch eine Duroplastmatrix mit einer eine Betriebstemperatur von lediglich 85 °C ermöglichenden Glasumwandlungstemperatur, wohingegen der Isolator nach der Erfindung nahezu die gleichen mechanischen Belastungen auch noch bei einer Betriebstemperatur von 105 °C aufnehmen kann.

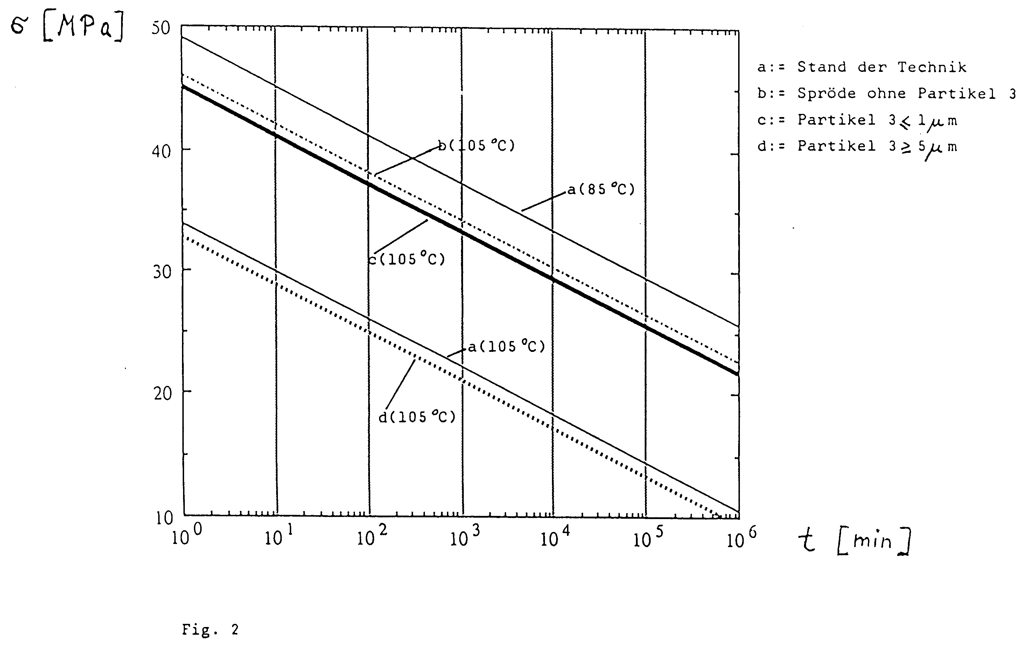

Wie nachfolgend anhand des Zeitstand-Schaubildes gemäss Fig. 2 erläutert wird, kann der Isolator nach der Erfindung hohe mechanische Belastungen bei Betriebstemperaturen von 105 °C zudem über einen langen Zeitraum aufnehmen. Im Zeitstand-Schaubild sind zugeordnete Wertepaare von Spannung δ und Belastungsdauer t bis zum Bruch des Probekörpers als Zeitbruchlinien a(85 °C), a(105 °C), b(105 °C), c(105 °C) und d(105 °C) eingetragen. Hierbei beziehen sich die Zeitbruchlinien a(85 °C) bzw. a(105 °C) auf einen bei 85 °C bzw-. 105 °C geprüften Probekörper nach dem Stand der Technik mit einer Glasumwandlungstemperatur von 119 °C. Die Zeitbruchlinie b(105 °) bezieht sich auf einen bei 105 °C geprüften Probekörper ohne zugesetzte Partikel 3 und mit einer Glasumwandlungstemperatur von 151 °C. Die Zeitbruchlinien c(105 °C) bzw. d(105 °C) beziehen sich auf einen bei 105 °C geprüften Probekörper mit zugesetzten elastischen Partikeln 3 mit Partikelgrössen kleiner 1 »m bzw. von ca. 5 »m. Hierbei sind alle Probekörper selbstverständlich gleichartig geformt und weisen jeweils gleiche Zusätze an mineralischem Füllstoff, d.h. an Quarzmehl gemäss dem Ausführungsbeispiel 1, auf.

Aus dem Zeitstand-Schaubild gemäss Fig. 2 ist ersichtlich, dass die durch die Zeitbruchlinie c kenntlich gemachte Lebensdauer eines aus dem Material eines Isolators nach der Erfindung hergestellten Probekörpers bei 105 °C bei Spannungsbelastung nahezu die gleiche Lebensdauer hat wie ein Probekörper gemäss Zeitbruchlinie b mit gleicher, hochtemperaturbeständiger Duroplastmatrix, aber gemäss Tabelle 1 wesentlich verringerter Bruchzähigkeit. Gegenüber einem aus dem Material eines Isolators nach dem Stand der Technik hergestellten Probekörper weist er bei einer Prüftemperatur von 105 °C hingegen eine um mehrere Grössenordnungen verlängerte Lebensdauer auf. Da die Lebensdauer gemäss der Zeitbruchlinie d(105 °C) bei einem Probekörper mit Durchmessern der elastischen Partikeln 3 grösser 5 »m drastisch absinkt, ist es bei der Herstellung eines Isolators nach der Erfindung zweckmässig, die Durchmesser der elastischen Partikel 3 kleiner 5 »m, vorzugsweise sogar kleiner 1 »m, zu halten.

### Ausführungsbeispiele 2 - 4

In weiteren Ausführungsbeispielen wurden entsprechend dem Ausführungsbeispiel 1 Isolatoren nach der Erfindung hergestellt und hinsichtlich ihrer Materialeigenschaften geprüft.

Aus der nachfolgend angegebenen Tabelle 2, in der die Zusammensetzung und die mechanischen Eigenschaften der Materialien dieser Isolatoren angegeben sind, geht hervor, dass der Isolator nach der Erfindung nicht nur auf Quarzmehl als mineralischem Füllstoff beschränkt ist, sondern dass ohne weiteres auch andere Füllstoffe, wie etwa Korundmehl oder Titandioxidmehl, auch in unterschiedlichen Zugabemengen verwendet werden können.

**Tabelle 2**

| Ausgangsstoffe | Gewichtsteile | | |
|---|---|---|---|
| | Probe | | |
| | 2 | 3 | 4 |
| Araldit CY 225 | 125 | 82 | 75 |
| Härter HY 1102 | 110 | 75 | 70 |
| Beschleuniger DY 062 | 0,3 | 0,2 | 0,2 |
| Paraloid EXL 2607 | 15 | 8 | 5 |
| Korundmehl (Al₂O₃) | 400 | 335 | -- |
| Titandioxidmehl (TiO₂) | -- | -- | 350 |
| Zugfestigkeit [MPa] | 65 | 60 | 50 |
| Bruchzähigkeit [MPam-1/2] | 2,0 | 1,8 | 1,5 |

Durch die Zugabe der elastischen Partikel 3 zum Reaktionsharzsystem wurden bei allen Ausführungsbeispielen weder die Verarbeitungseigenschaften des Harzsystems beeinträchtigt noch trat bei der Herstellung grossvolumiger Isolatoren ein grösserer Reaktionsschwund ein als bei der Herstellung von Referenzisolatoren nach dem Stand der Technik mit vergleichsweise niedrigen Glasumwandlungstemperaturen.

## Patentansprüche

1. Elektrischer Isolator, enthaltend eine Duroplastmatrix (1) mit einer Glasumwandlungstemperatur grösser 140°C und in die Duroplastmatrix (1) eingebettete erste (2) und zweite Partikel (3), von denen die ersten Partikel (2) überwiegend aus mineralischem Füllstoff bestehen und die zweiten Partikel (3) zumindest teilweise jeweils einen elastisch verformbaren Kern (4) und eine den Kern (4) umgebende und als Armierung dienende steife Hülle (5) aufweisen, dadurch gekennzeichnet, dass die Durchmesser der zweiten Partikel (3) kleiner 5 »m sind.

2. Isolator nach Anspruch 1, dadurch gekennzeichnet, dass die Durchmesser der zweiten Partikel (3) höchstens 1 »m sind.

3. Isolator nach einem der Ansprüche 1 - 2, dadurch gekennzeichnet, dass der Anteil an zweiten Partikeln (3) höchstens 15 Gewichtsprozent einer zur Bildung der Duroplastmatrix (1) erforderlichen Reaktionsharzmenge ausmacht.

4. Isolator nach Anspruch 3, dadurch gekennzeichnet, dass der der Anteil an zweiten Partikeln (3) mindestens 5 Gewichtsprozent der Reaktionsharzmenge ausmacht.

## Claims

1. Electrical insulator comprising a thermosetting matrix (1) with a glass transition temperature exceeding 140°C, and first (2) and second particles (3), of which the first particles (2) are composed predominantly of mineral filler and the second particles (3) each have at least in part an elastically deformable core (4) and a stiff envelope (5) surrounding the core (4) and acting as reinforcement, characterized in that the diameters of the second particles (3) are smaller than 5 »m.

2. Insulator according to Claim 1, characterized in that the diameters of the second particles (3) are not more than 1 »m.

3. Insulator according to one of Claims 1 - 2, characterized in that the proportion of second particles (3) makes up not more than 15 per cent by weight of an amount of casting resin required to form the thermosetting matrix (1).

4. Insulator according to Claim 3, characterized in that the the [sic] proportion of second particles (3) makes up at least 5 per cent by weight of the amount of casting resin.

## Revendications

1. Isolateur électrique contenant une matrice de résine thermodurcissable (1) avec une température de transition vitreuse supérieure à 140°C et des premières (2) et deuxièmes (3) particules noyées dans la matrice de résine thermodurcissable (1), dont les premières particules (2) se composent majoritairement d'une charge minérale et les deuxièmes particules (3) présentent respectivement, du moins partiellement, un noyau (4) déformable élastiquement et une gaine rigide (5) entourant le noyau (4) et servant d'armature, caractérisé en ce que les diamètres des deuxièmes particules (3) sont inférieurs à 5 »m.

2. Isolateur selon la revendication 1, caractérisé en ce que les diamètres des deuxièmes particules (3) s'elèvent tout au plus à 1 »m.

3. Isolateur selon l'une des revendications 1 ou 2, caractérisé en ce que la part de deuxièmes particules (3) constitue tout au plus 15% en poids d'une quantité de résine de réaction nécessaire à la formation de la matrice de résine thermodurcissable (1).

4. Isolateur selon la revendication 3, caractérisé en ce que la part des deuxièmes particules (3) constitue au moins 5% en poids de la quantité de résine de réaction.
